# EUROPEAN PATENT SPECIFICATION

(11) **EP 3 040 578 B1**
(45) Date of publication and mention of the grant of the patent: **14.12.2016**
(21) Application number: 14200591.7
(22) Date of filing: 30.12.2014
(51) Int. Cl.: F16F 15/32, G01M 1/32

(54) **Automatic dispenser for balancing weights**
Automatischer Spender für Auswuchtgewichte
Distributeur automatique de poids d'équilibrage

(43) Date of publication of application: 06.07.2016
(73) Proprietor: WEGMANN automotive GmbH & Co. KG, 97209 Veitshöchheim (DE)
(72) Inventor: Bürgel, Hans-Ulrich, 97849 Roden (DE)
(74) Representative: Lohr, Georg

(56) References cited:
- EP-A2- 1 253 414
- US-A1- 2006 016 309

## Description

### Field of the invention

The invention relates to an automatic dispenser for balancing weights. Such balancing weights may be used for balancing wheels of vehicles.

### Description of the related art

For balancing vehicle wheels, balancing weights are used. Self-adhesive balancing weights comprise segments of a mass material which may be a metal, like zinc or steel, having a self-adhesive tape at one side, by which the mass material may be held to a rim of a wheel. Multiple pieces or segments of such a mass material are held together by a strip of adhesive tape, forming a chain or a belt of balancing weights. The self-adhesive tape is protected by a liner, also called backing at the side opposite to the balancing weight segments. Before applying a balancing weight to a rim, the liner is removed.

US 3,960,409 shows such a belt of balancing weights which may have a significant length and which may be wound up to a coil to simplify storage.

EP 1 253 414 A2 discloses a complex dispensing device for balancing weights. Here, the liner is removed from the self-adhesive tape, then sections of balancing weight are cut from the tape and directly fed to an applicator. This device is intended for automatic tire balancing systems.

In tire workshops, the mass required for balancing a wheel is determined by a balancing machine, and a corresponding number of balancing weight segments is manually cut off from a belt of balancing weights. Then the liner is removed and the balancing weight is applied to a rim. Manually counting the number of required balancing weight segments and cutting them off is time-consuming and prone to errors. To allow for manual handling, the balancing weight segments must have a minimum size which may be 10 or 5 grams. Lower masses would be difficult to handle, due to small size of the weight segments. This leads to a limited weight resolution and therefore to a limited balancing precision.

### Summary of the invention

The problem to be solved by the invention is to provide a simple and inexpensive dispenser for balancing weights comprising at least one balancing weight with an adhesive tape, which is able to deliver a required mass of self-adhesive balancing weight sections with a high speed, and which allows handling of small balancing weight segments. Furthermore, the liner should be in place at the self-adhesive tape to allow manual handling of the weight.

Solutions of the problem are described in the independent claims. The dependent claims relates to further improvements of the invention.

In a preferred embodiment, the dispenser comprises a transport section and a cutting section. The transport section is for transporting a belt of balancing weights to provide a certain amount of balancing weight segments which are cut off the tape by the cutting section. The transport section comprises at least one transport belt which preferably is driven by a first transport roller and a second transport roller. The transport belt generates friction to the belt of balancing weights, and therefore transports the balancing weight segments to the cutting section.

Preferably, the belt of balancing weight segments comprises a plurality of balancing weight segments which are held together by an adhesive tape for attaching the balancing weight segments to a rim of a wheel.

It is further preferred if there is a backing or liner to protect the adhesive surface of the adhesive tape opposing to the balancing weights.

It is further preferred, if the adhesive tape has at least one strengthening layer to increase the shear strength of the belt to simplify transport by the transport section.

Preferably, the belt of balancing weights is wound to a coil which supplies the transport section.

It is preferred, if the transport section pulls the balancing weights at the belt of balancing weights from a stock which may be a coil of balancing weights, and it pushes the balancing weights into the cutting section. It is preferred to have a slideway which may be part of the cutting section on which the balancing weights may slide horizontally.

It is further preferred, if the transport section forms an angle, which preferably is in the range between 70 and 110 degrees, and most preferably is a 90 degrees angle. It preferably receives balancing weights in a vertical direction, further redirecting the balancing weights to a horizontal direction. This may be done by curving the belt of balancing weights around a first counter roller. Although the horizontal and vertical directions disclosed herein are preferred, the embodiments may be arranged in any other way.

To ensure a proper contact of the belt of balancing weights with the transport belt, and therefore to provide a good friction for transporting the belt of balancing weights, it is preferred, if the transport belt and/or the first transport roller is pressed against the first counter roller, which preferably may be done by a belt tensioner.

It is further preferred to press the belt of balancing weights against the second transport roller by a second counter roller, which may be spring-loaded.

For transporting a desired number of balancing weight segments, either the length of transported belt may be measured, or the number of balancing weight segments may be counted. Both methods may be used together to get an additional reference and to increase reliability. For determining the length of transported balancing weight belt, it is preferred to have a slot wheel having a plurality of slots which may be detected and/or counted by means of a photo sensor. The slot wheel preferably is connected to the first transport roller, but may also be connected to the second transport roller, or to any of the counter rollers. Instead of a slot wheel, there may be any other means for detecting rotation, like a resolver or angle encoder. There may also be a drive motor driving at least one of the wheels, most preferably the second transport roller, which preferably has an angle encoder or which may be a stepper motor. In the case of a stepper motor, the number of steps is a measure of the transported length of balancing weights.

Alternatively or additionally, there may be at least one means for counting the number of balancing weight segments. This may be done by detecting the gaps between the balancing weight segments, for example by means of a photo sensor or any optical sensor. To increase the width of the gap, it is preferred to bend the belt of balancing weights. It is preferred to bend the belt of balancing weights around the first counter roller, counting the balancing weights passing said first counter roller.

It is preferred, if the cutting section comprises a cutter edge, which preferably has an angle in the range from 79 to 110 degrees and most preferably has a 90 degrees angle. Preferably, there is a horizontal plane at which the balancing weights are pushed slidingly from the transport section to the cutting section. It is further preferred to have a second plane which is oriented vertically. Before cutting, a required number of balancing weight sections corresponding to the required mass is pushed by the transport section over the cutter edge. Therefore, the selected number of balancing weights extends over the cutter edge. Before initiating a cut, the extending balancing weights are bent to an angle corresponding to the cutter edge angle by means of a counter holder. The counter holder further holds the balancing weight sections in a predetermined position during the cutting process. After the counter holder is in its cutting position and holds the balancing weight segments at their positions, a cutter is operated by moving a knife guide holding a knife from one side of the belt of balancing weights to the other side, where the knife is guided between two balancing weight sections. The knife is only able to cut the adhesive tape (including backing or liner) connecting the balancing weight sections. It is not designed for cutting the material of balancing weight sections, which may be steel or aluminum, or any other metal.

By the design of the cutting section having a cutter edge and the corresponding counter holder, the chain of balancing weights is bent to an angle corresponding to the cutter edge. Such a bending of the belt of balancing weights can only be done at an elastic section, which is a section between two balancing weight segments. Such a bending never can occur within a balancing weight section. Therefore it is ensured, that always a section between two balancing weight segments is at the cutter edge, where the knife operates. This bending also compensates for small deviations in distance between balancing weight segments. There may be tolerances in the width of the balancing weight segments as well as in the distance between individual balancing weight segments. For example, the length between the transport section and the cutter edge may be designed such that if the optical sensor detects a gap between two balancing weight segments, there may fit a predetermined number of balancing weight segments between the optical sensor and the cutter edge. If there are slightly increased gaps between the balancing weights, which may for example occur due to tensioning stress of the adhesive tape during processing, the front-most balancing weight segment will slightly extend over the cutter edge. By the counter holder, the balancing weight segments are pushed back and aligned exactly to the cutter edge so that the knife would not collide with the slightly extending balancing weight segment. Therefore, alignment does not require a precision drive system and a precision position sensor for detecting the position of the balancing weight segments. Instead a comparatively simple and cheap sensor for weight counting may be used. This sensor only has to detect the presence of a balancing weight segment or a gap, but it must not determine the precise position of a balancing weight segment.

The angle of the cutter edge which is preferably in the range between 70 and 110 degrees and most preferably 90 degrees ensures a comparatively sharp bending and therefore opens a comparatively wide gap between the weight segments to be separated by the cut. This guide allows moving the knife through the tape. Bending the weights reduces stress to the adhesive tape. If the balancing weight segments would simply be pushed apart to produce a gap between two balancing weight segments, the comparatively flexible self-adhesive tape or foam would expand in length, while the less flexible backing or liner would tear or at least separate from the tape. This is prevented by the bending as disclosed above. For manually handling the cut balancing weight segments it is essential, that the liner remains in place. Otherwise, the cut segments would immediately stick to a tray into which the dispenser delivers the cut segments.

After a certain number of balancing weight segments have been cut by the cutter, they may slide driven by gravity along the preferably vertical side of the cutter base and fall into a tray, from which they may be taken out and attached to a rim of a wheel.

The cutting section and the transport section preferably are used together as described herein. Alternatively, it is preferred to use the cutting section without or with a different transport section. For example, the transport section may be simplified and use only a first transport roller and a first counter roller to generate the required friction to the belt of balancing weights.

The embodiments described herein allow for automatic cutting of required mass sections form a belt of balancing weights. Due to the automatic transport and cutting a high speed can be achieved and a large number of balancing weight can be processed in a short time interval. Furthermore standard size segments of balancing weights as well as smaller and even significantly smaller segments can be processed. This may result in a much better balancing weight resolution compared to manual processing. Conventional balancing weight segments often are designed to have a size which can easily be handled. Therefore, lightweight segments may be comparatively thin, resulting in a larger surface, which can better be gripped or they may be made of a low density material resulting in a larger size. By the embodiments, the balancing weight segments may have very small sizes as there is no need to increase size for manual handling of every segment.

Due to the automated cutting, a more stable and robust adhesive tape may be used. It may even have a robust support layer included. While it may be impossible to make a manual clean cut for separating segments, the automated cutting with a guided knife and the balancing weights held in a predetermined position at the cutter edge will result in a precise cut.

A further embodiment relates to a method for delivery of cut sections of balancing weights. The method comprises the steps of transporting a certain number of balancing weight sections being part of a belt of balancing weights over a cutter edge of a cutter base, bending the balancing weights extending over the cutter edge by means of a counter holder, such that a gap opens between two adjacent balancing weight segments, at the cutter edge and moving a knife from one side of the belt of the balancing weights to the other side of the belt of balancing weights, and therefore cutting a section of cut balancing weights from the belt of balancing weights.

### Description of Drawings

In the following the invention will be described by way of example, without limitation of the general inventive concept, on examples of embodiment with reference to the drawings.
- Figure 1: shows a preferred embodiment.
- Figure 2: shows a preferred embodiment before cutting.
- Figure 3: shows a side view.
- Figure 4: shows a weight counting means.
- Figure 5: shows a side view of the weight counter.
- Figure 6: shows a detailed side view.
- Figure 7: shows the operation of the cutter.
- Figure 8: shows the cutter in an idle state.

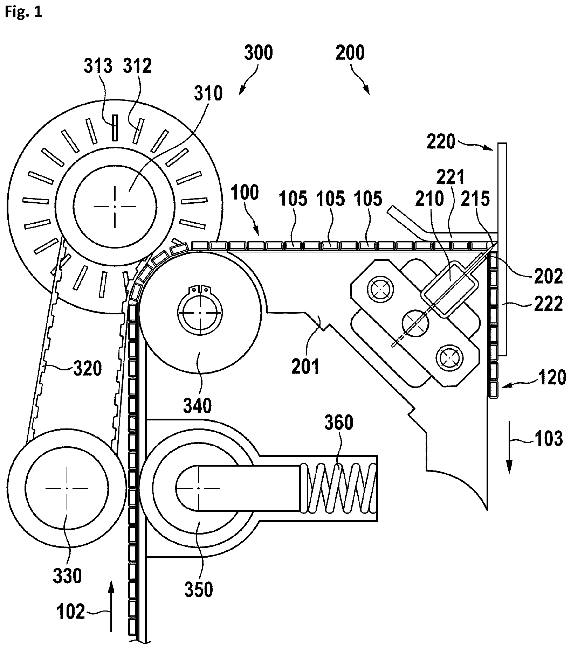

In Figure 1, a preferred embodiment is shown in a side view. The dispenser comprises a transport section 300 and a cutting section 200. A belt of balancing weights 100 is fed by a drive mechanism to a cutter, where desired portions of mass material are cut from the belt. In this embodiment, a belt of balancing weights 100 comprising of a plurality of individual balancing weight segments 105, is fed at the left side in feeding direction 102 into the transport section of the dispenser. There may be a coil (not shown) for supplying the balancing weights. Preferably, a first counter roller 340 is provided for directing the received balancing weight segments, which preferably are coming from an approximately vertical direction preferably into an approximately horizontal direction, for easier cutting. A transport belt 320, which preferably is suspended between a first transport roller 310 and a second transport roller 330, preferably presses the belt of balancing weights 100 against the first counter roller, and therefore generates friction to the belt of balancing weights. It is preferred, if a second counter roller 350 is provided, which may be supported by a spring 360 to press the belt of balancing weights against the transport belt 320. The way of movement and the speed of movement of the belt of balancing weights is determined by the transport belt 320, and therefore by the first and second transport rollers 310, 330. It is preferred, if at least one of these transport rollers, preferably the second transport roller 330 is driven by a motor. To determine the precise amount of balancing weight mass material, which has been transported, an angle encoder or counter may be provided. This may be done by providing a slot wheel 312 having a plurality of slots 313 which rotates with the same speed as the transport belt 320. A photo sensor may be used to count the number of slots passing the sensor. After passing the first counter roller, the balancing weights are pushed in an approximately horizontal direction, and are guided by a cutter base 201. The cutter base 200 has a cutter edge 202, at which sections 120 of the belt of balancing weights are cut. Cutting is done by a knife 215 which is held by a knife guide 210. Before cutting, the section of balancing weights 120 to be cut off of the belt is bent to an approximately 90 degrees angle and held in place by a counter holder 220 which preferably has a first section 221 which is approximately parallel to the cutter base 200 and therefore preferably in an approximately horizontal plane, and a second section 222 which forms an approximately right angle with the first section. The counter holder is pressing the belt of balancing weights to an angle corresponding to an angle of the cutter base, which is preferably approximately 90 degrees, although other angles may also be used. This angle is formed at the position, where a section of balancing weights 120 is cut from the belt of balancing weights 100. The balancing weights around the cutter edge 202, form a gap between balancing weights which allows the knife to slide between two neighbored balancing weights. After forming the angle, the cutter comprising a knife 215 held by a knife guide 210 is moved from one side to the other side through the belt of balancing weights, cutting the adhesive tape between two balancing weight segments, without cutting the balancing weight segments themselves, and therefore separating a section of cut balancing weights 120 from the belt of balancing weights 100.

After cutting, a section of cut balancing weights 120 slides or falls down along the cutter base in a direction as indicated by arrow 103, and may be delivered to a tray from which either a robot or a person may take out the balancing weight for applying it to a wheel.

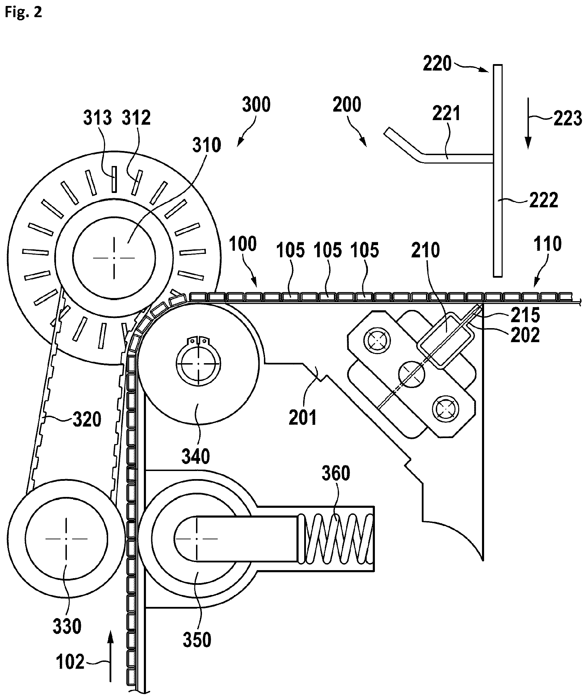

In Figure 2, a preferred embodiment is shown before a cutting operation. Here, a portion of selected balancing weights 110 has been delivered by the transport section and is extending beyond the cutter base 200. The counter holder 220 is in an open state in which it does not touch the balancing weights. After a desired quantity of balancing weights have been transported beyond the cutter edge 202, the counter holder 220 is moved in a direction 223 - as shown in the previous figure - to press the balancing weights around the cutter edge 202, forming a gap between balancing weights which allows the knife to slide between two neighbored balancing weights.

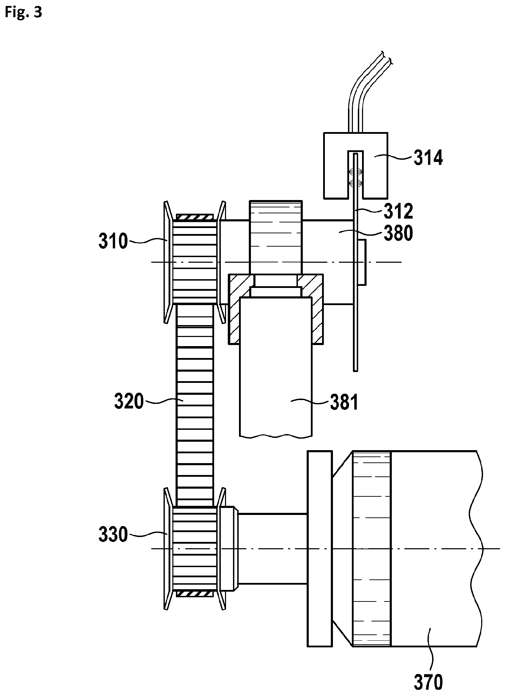

In Figure 3, a side view of a first embodiment is shown. At the left side, first transport roller 310, transport belt 320, and second transport roller 330 are shown. The second transport roller 330 is driven by a motor 370 preferably having a gear. Preferably, the first transport roller 310 is held by a bearing and support unit 380, which preferably is pressed by a belt tensioner 381 to ensure pressure of the first transport roller 310 together with the transport belt 320 against the first counter roller 340 to ensure a proper friction between the transport belt 320 and belt of balancing weights 100. It is further preferred to have a slot wheel 312 connected to the first transport roller 310 and a photo sensor 314 for counting the slots at the slot wheel 312.

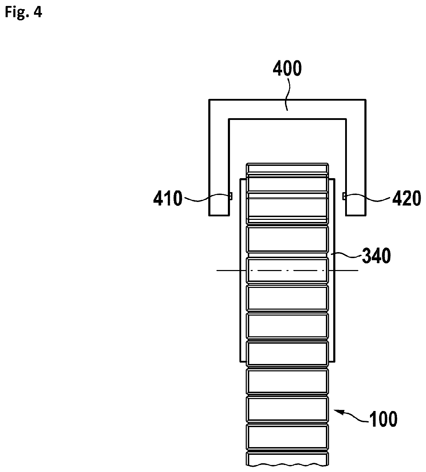

In Figure 4, a weight counting means is shown. Instead or in addition to the slot wheel 312, indicating the movement of the transport belt and therefore of the belt of balancing weights, a number of balancing weights passing the dispenser may be counted. This results in a more precise determination of the mass of balancing weights which is delivered by the dispenser. It also may compensate for slipping between the transport belt 320 and the belt of balancing weights 100. For counting the number of balancing weights, a magnetic counter, like an inductive sensor may be provided. A more robust solution is an optical sensor 400, which preferably has an optical transmitter 410 and an optical receiver 420 opposing thereto. When the belt of balancing weights is bent around a roller, like the first counter roller 340, a gap between the individual balancing weight segments opens. A beam of light may be guided through such a gap, and may be used to count the number of balancing weight segments.

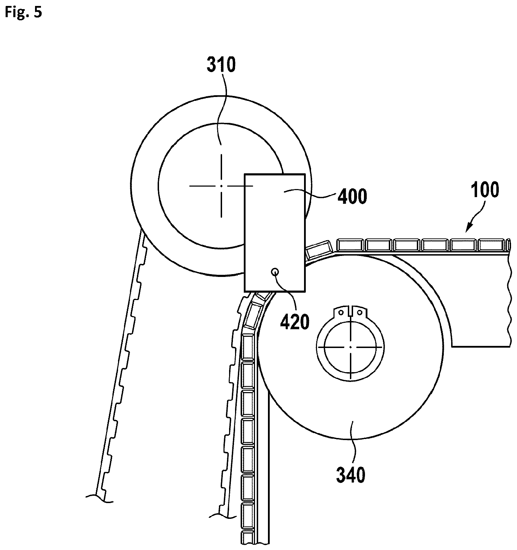

In Figure 5, a side view of the balancing weight counter is shown. The placement of the optical sensor can be modified, although it is preferred to have it at a position indicated half way between the horizontal and the vertical position of the belt of balancing weights 100, where the gap between neighbored balancing weights is largest.

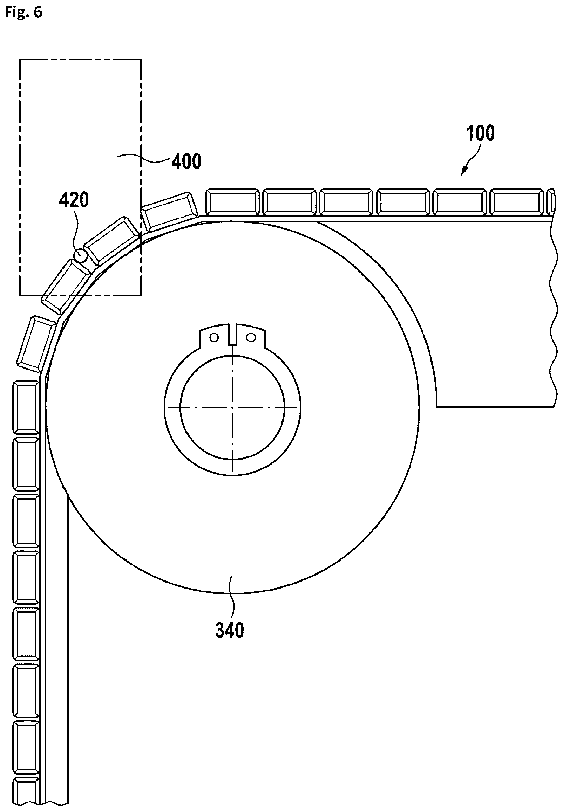

Figure 6, a detailed side view of the chain of balancing weights 100 connected by an adhesive tape 101 passing first counter roller 340 is shown. Here it can be seen, that gaps 106 open between the balancing weights through which the optical transmitter 410 can forward light to the optical receiver 420, which generates a signal of the optical sensor 400.

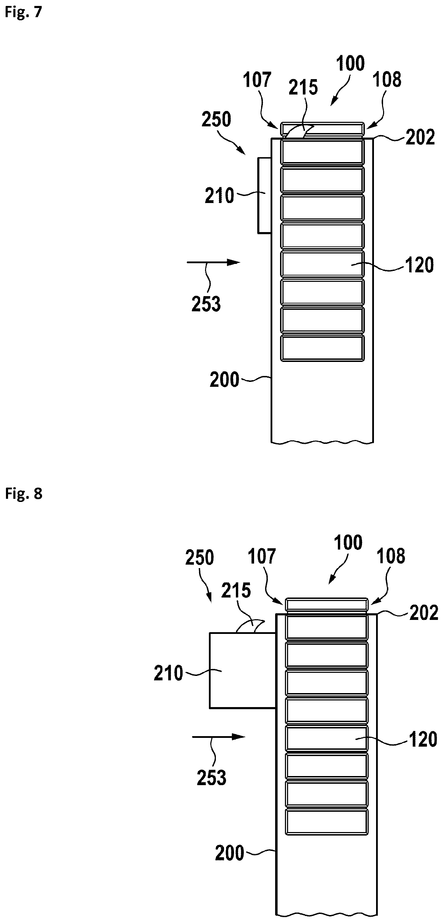

In Figure 7, the operation of the cutter 250 comprising a knife guide 210 with attached knife 215 is shown. This image is a sectional view from right side of Figure 1 to the cutter, where the counter holder has been omitted. Due to bending the belt of balancing weights, a gap forms at the cutter edge 202, through which a knife 215, which is attached to a knife guide 210, is moved in direction 253 from a first side 107 of the belt of balancing weights to the second side 108 to separate the section of cut balancing weights 120 from the belt of balancing weights 100.

In Figure 8, the cutter 250 is shown in an idle state, where the knife 215 is outside of the belt of balancing weights.

### List of reference numerals

- 100: balancing weights
- 101: tape
- 102: balancing weight feeding direction
- 103: balancing weight delivery direction
- 105: balancing weight segment
- 106: gap between balancing weight segments
- 107: first side
- 108: second side
- 110: selected balancing weights
- 120: cut balancing weights
- 200: cutting section
- 201: cutter base
- 202: cutter edge
- 210: knife guide
- 215: knife
- 220: counter holder
- 221: first section
- 222: second section
- 223: direction of movement of counter holder
- 250: cutter
- 253: cutter movement
- 300: transport section
- 310: first transport roller
- 312: slot wheel
- 313: slot
- 314: photo sensor
- 320: transport belt
- 330: second transport roller
- 340: first counter roller
- 350: second counter roller
- 360: spring
- 370: motor/gear
- 380: bearing/support
- 381: belt tensioner
- 400: optical sensor
- 410: optical transmitter
- 420: optical receiver

## Claims

1. Automatic dispenser for balancing weights comprising a transport section (300) and a cutting section (200),
**characterized in, that**
the transport section comprises a transport belt (320) held between a first transport roller (310) and a second transport roller (330), the transport belt (320) generating friction to a belt of balancing weights (100) comprising a plurality of individual balancing weight segments (105), in conjunction with a first counter roller (340) for transporting the belt of balancing weights (100) to the cutting section, the cutting section having a cutter base (201) forming a cutter edge (202) for bending the belt of balancing weights about an angle by means of a counter holder (220) which has an angle corresponding to the angle of the cutter edge, the cutting section further having a knife (215) movable from a first side (107) of the belt of balancing weights to a second side (108), to separate the belt of balancing weights between two individual balancing weight segments (105) at the cutter edge.

2. Automatic dispenser for balancing weights according to claim 1,
**characterized in that**
a slot wheel (312) comprising a plurality of slots (313) is coupled to at least one of the first transport roller (310), the second transport roller (330), the first counter roller (340), or the second counter roller (350), and further being coupled to a photo sensor (314) for detecting individual slots, and therefore determine the length of movement of the belt of balancing weights (100).

3. Automatic dispenser for balancing weights according to any one of the preceding claims,
**characterized in that**
an optical sensor (400) is provided for detecting gaps between individual balancing weights.

4. Automatic dispenser for balancing weights according to claim 3,
**characterized in that**,
the optical sensor (400) is mounted at a location where the belt of balancing weight is bent.

5. Automatic dispenser for balancing weights according to claim 3 or 4,
**characterized in that**,
the signal of the optical sensor (400) is used for counting the number of balancing weights.

6. Automatic dispenser for balancing weights according to any one of the preceding claims,
**characterized in that**,
the first transport roller (310) is pressed against the first counter roller (340) to increase friction between the transport belt (320) and the belt of balancing weights (100).

7. Automatic dispenser for balancing weights according to any one of the preceding claims,
**characterized in that**
a second counter roller (350) is provided for further pressing the belt of balancing weights (100) against the transport belt (320) and/or a second transport roller (330).

8. Automatic dispenser for balancing weights according claim 7,
**characterized in that**,
the second counter roller is spring-loaded.

9. Automatic dispenser for balancing weights according to any one of the preceding claims,
**characterized in that**,
the cutting section has a cutter base (201) for guiding the belt of balancing weights (100) towards the cutter edge (202).

10. Automatic dispenser for balancing weights according to any one of the preceding claims,
**characterized in that**
the cutter edge forms an angle between 70 and 110 degrees.

11. Automatic dispenser for balancing weights according to any one of the preceding claims,
**characterized in that**
the cutter edge forms an angle of 90 degrees.

12. Automatic dispenser for balancing weights according to any one of the preceding claims,
**characterized in that**
the individual balancing weight segments (105) comprise a metal like zinc or steel.

13. Method for delivering a selected number of balancing weight segments (105) by
transporting a belt of balancing weights (100) over a cutter edge (202) of a cutter base (201),
bending the belt of balancing weight such that the balancing weights extending over the cutter edge by means of a counter holder, such that a gap opens between two adjacent balancing weight segments (105), and moving a knife from one side of the belt of the balancing weights to the other side of the belt of balancing weights (100), and therefore cutting a section of cut balancing weights (120) from the belt of balancing weights (100).

## Patentansprüche

1. Automatische Ausgabeeinrichtung für Auswuchtgewichte, umfassend einen Transportabschnitt (300) und einen Schneideabschnitt (200),
**dadurch gekennzeichnet, dass**
der Transportabschnitt einen Transportgurt (320) umfasst, welcher zwischen einer ersten Transportrolle (310) und einer zweiten Transportrolle (330) gehalten ist, wobei der Transportgurt (320) Reibung auf einen Auswuchtgewichtegurt (100) umfassend eine Vielzahl von einzelnen Auswuchtgewichtesegmenten (105) erzeugt, in Verbindung mit einer ersten Gegenrolle (340) zum Transportieren des Auswuchtgewichtegurtes (100) zu einem Schneideabschnitt, wobei der Schneideabschnitt eine eine Schneidekante (202) bildende Schneidegrundfläche (201) hat, um den Auswuchtgewichtegurt mithilfe eines Gegenhalters (220) in einem Winkel zu biegen, wobei der Gegenhalter (220) einen Winkel hat, der dem Winkel der Schneidekante entspricht, wobei der Schneideabschnitt weiterhin ein Messer (215) hat, welches von einer ersten Seite (107) des Auswuchtgewichtegurtes zu einer zweiten Seite (108) beweglich ist, um den Auswuchtgewichtegurt zwischen zwei einzelnen Auswuchtgewichtesegmenten (105) an der Schneidekante zu trennen.

2. Automatische Ausgabeeinrichtung für Auswuchtgewichte nach Anspruch 1,
**dadurch gekennzeichnet, dass**
ein geschlitztes Rad (312) mit einer Vielzahl von Schlitzen (313) an zumindest eine von der ersten Transportrolle (310), der zweiten Transportrolle (330), der ersten Gegenrolle (340) oder der zweiten Gegenrolle (350) gekoppelt ist, und weiterhin an einen Photosensor (314) zum Detektieren einzelner Schlitze gekoppelt ist, um damit die Länge der Bewegung des Auswuchtgewichtegurtes (100) zu bestimmen.

3. Automatische Ausgabeeinrichtung für Auswuchtgewichte an einem der vorhergehenden Ansprüche,
**dadurch gekennzeichnet, dass**
ein optischer Sensor (400) zum Detektieren von Lücken zwischen den einzelnen Auswuchtgewichten bereitgestellt ist.

4. Automatische Ausgabeeinrichtung für Auswuchtgewichte nach Anspruch 3,
**dadurch gekennzeichnet, dass**
der optische Sensor (400) an einem Platz montiert ist, wo der Auswuchtgewichtegurt gebogen wird.

5. Automatische Ausgabeeinrichtung für Auswuchtgewichte nach Anspruch 3 oder 4,
**dadurch gekennzeichnet, dass**
das Signal des optischen Sensors (400) zum Zählen der Anzahl von Auswuchtgewichten verwendet wird.

6. Automatische Ausgabeeinrichtung für Auswuchtgewichte an einem der vorhergehenden Ansprüche,
**dadurch gekennzeichnet, dass**
die erste Transportrolle (310) gegen die erste Gegenrolle (340) gepresst wird, um die Reibung zwischen dem Transportgurt (320) und dem Auswuchtgewichtegurt (100) zu erhöhen.

7. Automatische Ausgabeeinrichtung für Auswuchtgewichte an einem der vorhergehenden Ansprüche,
**dadurch gekennzeichnet, dass**
die zweite Gegenrolle (350) bereitgestellt ist, um den Auswuchtgewichtegurt (100) weiter gegen den Transportgurt (320) und/oder die zweite Transportrolle (330) zu drücken.

8. Automatische Ausgabeeinrichtung für Auswuchtgewichte nach Anspruch 7,
**dadurch gekennzeichnet, dass**
die zweite Gegenrolle federbelastet ist.

9. Automatische Ausgabeeinrichtung für Auswuchtgewichte an einem der vorhergehenden Ansprüche,
**dadurch gekennzeichnet, dass**
der Schneideabschnitt eine Schneidegrundfläche (201) hat, um den Auswuchtgewichtegurt (100) zur Schneidekante (202) zu führen.

10. Automatische Ausgabeeinrichtung für Auswuchtgewichte an einem der vorhergehenden Ansprüche,
**dadurch gekennzeichnet, dass**
die Schneidekante einen Winkel zwischen 70 und 110 Grad bildet.

11. Automatische Ausgabeeinrichtung für Auswuchtgewichte an einem der vorhergehenden Ansprüche,
**dadurch gekennzeichnet, dass**
die Schneidekante einen Winkel von 90 Grad bildet.

12. Automatische Ausgabeeinrichtung für Auswuchtgewichte an einem der vorhergehenden Ansprüche,
**dadurch gekennzeichnet, dass**
die einzelnen Auswuchtgewichtesegmente (105) ein Metall, wie Zink oder Stahl umfassen.

13. Verfahren zur Ausgabe einer ausgewählten Anzahl von Auswuchtgewichtesegmenten (105) durch
Transportieren des Auswuchtgewichtegurtes (100) über eine Schneidekante (202) eines Schneidegrundfläche (201),
Biegen des Auswuchtgewichtegurtes durch einen Schneidehalter, so dass die Auswuchtgewichte über die Schneidekante hinausragen, so dass sich eine Lücke zwischen zwei benachbarten Auswuchtgewichtesegmenten (105) öffnet, und,
Bewegen eines Messers von einer Seite des Auswuchtgewichtegurtes zur anderen Seite des Auswuchtgewichtegurtes (100), und dadurch Abschneiden eines Abschnittes von Auswuchtgewichten (120) von dem Auswuchtgewichtegurt (100).

## Revendications

1. Un distributeur automatique pour équilibrer des poids comprenant une section de transport (300) et une section de découpe (200),
**Caractérisé en ce que**
La section de transport comprend une courroie de transport (320) tenue entre un premier rouleau de transport (310) et un deuxième rouleau de transport (330), la courroie de transport (320) générant une friction à une courroie de poids d'équilibrage (100) comprenant une pluralité de segments de poids d'équilibrage individuels (105), en conjonction avec un premier contre-rouleau (340) pour transporter la courroie de poids d'équilibrage (100) à la section de découpe, la section de découpe ayant une base de coupe (201) formant un bord de coupe (202) pour plier la courroie des poids d'équilibrage autour d'un angle au moyen d'un contre-support (220) qui possède un angle correspondant à l'angle du bord de coupe, la section de découpe ayant de plus une lame (215) amovible à partir d'un premier côté (107) de la courroie des poids d'équilibrage vers un deuxième côté (108), pour séparer la courroie des poids d'équilibrage entre deux segments de poids d'équilibrage individuels (105) sur le bord de coupe.

2. Un distributeur automatique pour équilibrer les poids selon la revendication 1,
**caractérisé en ce que**
Une roue à fente (312) comprenant une pluralité de fentes (313) est couplée à au moins un des premiers rouleaux de transport (310), le deuxième rouleau de transport (330), le premier contre-rouleau (340), ou le deuxième contre-rouleau (350), et étant de plus couplé à un capteur de photo (314) pour détecter des fentes individuelles, et par conséquent déterminer la longueur de mouvement de la courroie des poids d'équilibrage (100).

3. Un distributeur automatique pour l'équilibrage des poids selon l'une des revendications précédentes,
**Caractérisé en ce que**
Un capteur optique (400) est fourni pour détecter des espaces entre les poids d'équilibrage individuels.

4. Un distributeur automatique pour l'équilibrage des poids selon la revendication 3,
**Caractérisé en ce que**
Le capteur optique (400) est monté à un emplacement où la courroie du poids d'équilibrage est pliée.

5. Un distributeur automatique pour l'équilibrage des poids selon la revendication 3 ou 4, **caractérisé en ce que**
Le signal du capteur optique (400) est utilisé pour compter le nombre de poids d'équilibrage.

6. Un distributeur automatique pour l'équilibrage des poids selon l'une des revendications précédentes,
**Caractérisé en ce que**
Le premier rouleau de transport (310) est appuyé contre le premier contre-rouleau (340) pour augmenter la friction entre la courroie de transport (320) et la courroie de poids d'équilibrage (100).

7. Un distributeur automatique pour l'équilibrage des poids selon l'une des revendications précédentes,
**Caractérisé en ce que**
Un deuxième contre-rouleau (350) est fourni pour appuyer de plus la courroie des poids d'équilibrage (100) contre la courroie de transport (320) et/ou un deuxième rouleau de transport (330).

8. Un distributeur automatique pour l'équilibrage des poids selon la revendication 7,
**Caractérisé en ce que**
Le deuxième contre-rouleau est chargé par ressort.

9. Un distributeur automatique pour l'équilibrage des poids selon l'une des revendications précédentes,
**Caractérisé en ce que**
La section de coupe possède une base de coupe (201) pour guider la courroie des poids d'équilibrage (100) vers le bord de coupe (202).

10. Un distributeur automatique pour l'équilibrage des poids selon l'une des revendications précédentes,
**Caractérisé en ce que**
Le bord de coupe forme un angle entre 70 et 110 degrés.

11. Un distributeur automatique pour l'équilibrage des poids selon l'une des revendications précédentes,
**Caractérisé en ce que**
Le bord de coupe forme un angle de 90 degrés.

12. Un distributeur automatique pour l'équilibrage des poids selon l'une des revendications précédentes,
**Caractérisé en ce que**
Les segments de poids d'équilibrage individuel (105) comprennent un métal comme le zinc ou l'acier.

13. Une méthode pour fournir un nombre choisi de segments de poids d'équilibrage (105) en transportant une courroie de poids d'équilibrage (100) sur un bord de coupe (202) d'une base de coupe (201), pliant la courroie de poids d'équilibrage de sorte que les poids d'équilibrage s'étendant sur le bord de coupe au moyen d'un contre-support, de sorte qu'un espace s'ouvre entre deux segments de poids d'équilibrage adjacents (105), et déplaçant une lame d'un côté de la courroie des poids d'équilibrage à l'autre côté de la courroie des poids d'équilibrage (100), et par conséquent découpant une section de poids d'équilibrage coupés (120) à partir de la courroie des poids d'équilibrage (100).
